(19) Europäisches Patentamt
European Patent Office
Office européen des brevets

(11) Veröffentlichungsnummer: **0 248 860 B2**

(12)

# NEUE EUROPÄISCHE PATENTSCHRIFT

(45) Veröffentlichungstag der neue Patentschrift:
**17.05.95**

(51) Int. Cl.6: **A22C 13/00**

(21) Anmeldenummer: **87900110.5**

(22) Anmeldetag: **08.12.86**

(86) Internationale Anmeldenummer:
**PCT/EP86/00721**

(87) Internationale Veröffentlichungsnummer:
**WO 87/03452 (18.06.87 87/13)**

(54) **FÜLLFERTIG KONDITIONIERTE POLYAMID-NAHRUNGSMITTELHÜLLE, VERFAHREN ZU IHRER HERSTELLUNG SOWIE VERWENDUNG ZUR VERPACKUNG VON NAHRUNGSMITTELN.**

(30) Priorität: **11.12.85 DE 3543739**
**26.07.86 DE 3625409**

(43) Veröffentlichungstag der Anmeldung:
**16.12.87 Patentblatt 87/51**

(45) Bekanntmachung des Hinweises auf die Patenterteilung:
**15.05.91 Patentblatt 91/20**

(45) Bekanntmachung des Hinweises auf die Entsheidung über den Einspruch:
**17.05.95 Patentblatt 95/20**

(84) Benannte Vertragsstaaten:
**AT BE CH DE FR GB LI NL SE**

(56) Entgegenhaltungen:
| | |
|---|---|
| EP-A- 0 006 528 | EP-A- 0 139 888 |
| DE-A- 2 724 252 | DE-A- 2 756 683 |
| DE-A- 2 850 181 | DE-A- 2 850 182 |
| DE-A- 2 941 872 | DE-A- 3 212 344 |
| DE-A- 3 227 945 | DE-A- 3 625 409 |
| FR-A- 2 441 558 | US-A- 3 674 523 |

Prospekt "Betan-B-II" der Firma Naturin, Impressum 5/83

(73) Patentinhaber: **Naturin GmbH & Co**
**Badeniastrasse 13**
**D-69469 Weinheim (DE)**

(72) Erfinder: **ERK, Gayyur**
**Lärchenweg 14**
**D-6941 Gorxheimertal (DE)**
Erfinder: **KÜHN, Joachim**
**Tulpenweg 4**
**D-6940 Weinheim/Bergstrasse (DE)**

(74) Vertreter: **Klöpsch, Gerald, Dr.-Ing. Patentanwalt**
**An Gross St. Martin 6**
**D-50667 Köln (DE)**

EP 0 248 860 B2

**EP 0 248 860 B2**

**Beschreibung**

Die Erfindung betrifft eine füllfertig konditionierte Nahrungsmittelhülle aus wenigstens einem Polyamid, das wenigstens 5 Gew.-% Wasser aufnehmen kann oder einer Mischung dieses Polyamids mit wenigstens einem Ionomerharz und/oder einem Ethylen-Vinylacetat-Copolymeren, insbesondere zur Verpackung und Umhüllung von heiß abgepackten oder nach dem Verpacken erhitzten Nahrungsmitteln, ein Verfahren zur Herstellung dieser Nahrungsmittelhülle und ihre Verwendung zur Verpackung und Umhüllung von Nahrungsmitteln.

Die erfindungsgemäße Nahrungsmittelhülle ist eine Weiterentwicklung der in den DE-PS 28 50 181, DE-PS 28 50 182 sowie DE-PS 32 27 945 beschriebenen Polyamid-Wursthüllen. Auf den Inhalt der genannten Patentschriften wird ausdrücklich Bezug genommen.

Bei diesen vorbekannten Hüllen handelt es sich um schrumpffähig verstreckte Hüllen (DE-PS '181 und '181) bzw. bei den Verarbeitungstemperaturen nichtschrumpffähige, weil vollständig thermofixierte Hüllen (DE-PS '945).

Die tägliche Fertigungs- und Anwendungserfahrung mitden erfolgreich vermarkteten Nahtungsmittelhüllen gemäß den o.g. Patentschriften hat gezeigt, daß sie sowohl konfektionierungstechnisch als auch anwendungstechnisch noch verbesserungsbedürftig sind.

Die konfektionierungstechnische Weiterentwicklung betrifft das Ratten und das einseitige Verschließen der Hüllen, während die anwendungstechnische Verbesserung sich auf Vermeidung von Verarbeitungsfehlern bei einfachster Handhabung bezieht und ein wesentlich verbessertes Aussehen des Endprodukts zur Folge hat.

Konfektionierungstechnische Weiterentwicklung

Raffen

Es ist der Stand der Technik, daß alle bisher bekannt gewordenen Nahrungsmittelhüllen, so auch die im Rahmen dieser Anmeldung zu verbessernden, nur unter Einsatz von hydrophoben Raffschmiermitteln zerstörungsfrei, d.h. frei von Rafflöchern gerafft werden können. Als Schmiermittel sind lebensmitteltaugliche Triglycerid-Gemische besonders geeignet Diese Öle werden meistens unmittelbar vor dem Ratten an der Rattmaschine dem zu rattenden Schlauch appliziert.

Um die Haftung des Bräts an der Hülle nicht negativ zu beeinflussen, werden die dem Fachmann bekannten Raffschmiermittel in der Regel auf die Außenoberfläche der Nahrungsmittelhüllen während des Raffens auf den handelsüblichen Rattautomaten gesprüht.

Diese Vorgehensweise hat für Hüllen gemäß DE-PS 28 50 181, DE-PS 28 50 182 und DE-PS 32 27 945 erhebliche Nachteile:
- Das von außen auf die Nahrungsmittelhülle applizierte Raffschmiermittel benetzt sowohl die Hüllenoberfläche als auch die Rattwalzen, vermindert so die Reibungswerte und verursacht, weil die Raffwalzen die aufgeblasene Hülle nicht weiterbefördern können, Hüllenstau vor dem Raffdorn.
- Dabei drehen die Raffwalzen auf demselben Hüllenstück und erhitzen Hülle und Raffschmiermittel derart, daß Rafflöcher entstehen und/oder das Druckbild verschmiert wird.
- In gewissen Grenzen schwankende Raffschmiermittelmengen auf der Hüllenoberfläche sind technisch unvermeidbar. Sie führen zu unterschiedlichen Reibungswerten der Hüllenoberfläche. Dies ist die Ursache von untragbar hohen Kaliberschwankungen beim Füllen der Hüllen mit Wurstbrät, beispielsweise auf den üblichen Füll- und Clipautomaten mit von außen wirkender Bremslippe.
- Die hydrophoben Raffschmiermittel erschweren die Benetzung der Hüllenoberfläche mit Wasser und infolgedessen die gründliche Wässerung der Hüllen vor Ort. Inhomogen oder unzureichend gewässerte Hüllen gemäß DE-PS 28 50 181, DE-PS 28 50 182 und DE-PS 32 27 945 sind jedoch zum Füllen unbrauchbar, weil ihre speziellen Schrumpf- bzw. Elastizitätseigenschaften nur in mit Wasser gesättigtem Zustand aktiviert sind. Es ist nicht möglich, mangelhaft gewässerte Hüllen kaliberkonstant auf das vorgeschriebene Mindestkaliber zu füllen. Faltige und/oder ungleichmäßige Endprodukte sind in der Pegel auf solche Mängel zurückzuführen. Sie sind unerwünscht, weil sie den Verkaufswert des Endproduktes mindern. Die Weiterverarbeitung von Wurstwaren mit stark schwankenden Produktionskalibem zu Aufschnittstapelpackungen ist nicht möglich, weil die Gewichte der einzelnen Scheiben zu stark differieren.
- Raffschmiermittel wirken gleichzeitig als Trennmittel. Sie erschweren das Anbringen von Haftetiketten auf dem Fertigprodukt.

2

Abbinden/Clippen

Nahrungsmittelhüllen gemäß den vorgenannten Patentschriften werden üblicherweise durch einen kombinierten Knoten-/Clip-Verschluß zu einseitig abgebundenen Einzelhüllen unterschiedlicher Länge konfektioniert. Zu diesem Zweck werden sie in der Plissierstation einer handelsüblichen Abbindemaschine durch ein Walzenpaar mit ineinandergreifender Zahnung geführt, dadurch in Falten gelegt und von einem Greifer zum Fixieren in gefaltetem Zustand erfaßt und anschließend zur Clip- und Knotenstation weiter befördert.

Während der Übergabe an den Greifer springen die Falten der Hülle auf und erschweren dadurch das exakte Plazieren von Clip und Carnknoten. Es kommt häufig vor, daß sich der Clip in aufgesprungene Falten hineinbohrt oder zumindest schief sitzt.

Alle angesprochenen Konfektionierungsmängel sind Ursachen für Fertigungsunterbrechungen und Ausschuß. Es ist das Hauptziel der Erfindung, diese Nachteile zu vermeiden.

Anwendungstechnische Weiterentwicklung

Endprodukte mit schwankenden Durchmessern als Folge von unterschiedlichen Raffschmiermittelmengen auf dem Darm und als Folge unzureichender Wasserbenetzung vor Ort wurden bereits angesprochen.

Die Vermeidung von Endprodukten mit stark schwankenden Kalibern ist auch anwendungstechnisch gesehen eine Zielsetzung der Erfindung.

Ein weiteres, ebenfalls sehr wichtiges anwendungstechnisches Weiterentwicklungsziel der Erfindung ist die Vermeidung bzw. Minimierung von Raff-Falten im Endprodukt.

Es wurde erkannt, daß die Raffung der in Rede stehenden Nahrungsmittelhüllen, insbesondere gemäß DE-PS 32 27 945, nach dem Stand der Technik, d.h. lufttrokken und unter Anwendung des Raffschmiermittels, eine scharfe Einprägung der Raff-Falten in die Hülle verursacht. Auch nach dem Füllen der Hülle mit Brät unter 10%iger Durchmesserexpansion und sogar nach der Hitzebehandlung des Füllgutes unter weiterer Querexpansion können diese Falten nicht geglättet werden.

Aufgabe der Erfindung ist es, die Schlauchfolien gemäß DE-PS 28 50 181, DE-PS 28 50 182 und DE-PS 32 27 945 so zu verbessern, daß sie sich problemloser konfektionieren lassen, d.h. insbesondere ohne Verwendung eines zusätzlichen Raffschmiermittels so raffen lassen, daß die Hülle kaliberkonstant gefüllt werden kann, die Hülle fehlerfrei und ohne nennenswerten Ausschuß abgebunden bzw. geclippt werden kann und auf der gefüllten Hülle keine Raff-Falten mehr erkennbar sind.

Diese Aufgabe wird gelöst durch die kennzeichnenden Merkmale des Patentanspruchs 1 in Verbindung mit den Merkmalen des Oberbegriffs.

Es muß überraschen, daß mit einer einzigen Maßnahme, nämlich mit einer Befeuchtungsbehandlung vor dem Konfektionieren, alle angesprochenen Mängel mit einem Schlag beseitigt werden, wobei diese Mängel unterschiedliche, voneinander unnabhängige Ursachen haben. So ist es z.B. nicht möglich, die Vorgänge beim Ratten mit den Vorgängen beim Abbinden/Clippen und bei der Verarbeitung der Hüllen ursächlich miteinander in Verbindung zu bringen. Es handelt sich auch nicht um allgemeine, d.h. für alle bekannten Nahrungsmittelhüllen gültige Mängel. Es handelt sich vielmehr um spezielle Probleme der Polyamid-Hüllen gemäß den genannten Patentschriften.

Umfangreiche physikalische Untersuchungen haben gezeigt, daß die Wässerung der vorbekannten Hüllen vollkommen neue Eigenschaften herbeiführt.

Parallel zu den physikalischen Untersuchungen durchgeführte Raff- und Abbinde/Clip-Versuche belegen die Reproduzierbarkeit der überraschenden Befunde. Die Auswertung von anwendungstechnischen Tests mit gewässert konfektionierten Hüllen zeigte schließlich, daß diese äußerst kaliberkonstant gefüllt werden können und auf den hitzebehandelten Endprodukten keine Raff-Falten mehr aufweisen.

Aus der Wässerung der Hüllen ergibt sich die praktische Konsequenz, daß die erfindungsgemäßen Hüllen vor ihrer Verarbeitung beispielsweise in der Fleischwarenfabrik, nicht mehr gewässert zu werden brauchen, wenn sie in wassergesättigt konfektioniertem Zustand feuchtigkeitsdicht verpackt vorliegen. Damit sind diese Hüllen füllfertig und ersparen dem Anwender den Aufwand der Wässerung vor Ort. Dadurch entfallen auch die als potentielle Kontaminationsherde bekannten Wässerungsbehälter.

Die Bezeichnung "Sättigung" oder eine davon abgeleitete Wortbildung wird einerseits für die übliche Bezeichnung eines Zustandes verwendet, in dem normalerweise keine weitere Zufuhr von Wasser möglich ist, andererseits wird sie auch gebraucht zur Bezeichnung eines Zustandes in Richtung auf die 100%ige Erreichung einer "Sättigung" im engeren Sinn, was sich aus den dazugehörigen Mengenangaben oder dem Textzusammenhang ergibt.

3

Gewässert wird die Hülle bis zu einem Wassergehalt ihres Polyamidanteils von größer oder gleich 80% der Sättigungskonzentration, vorzugsweise von größer oder gleich 95% und insbesondere von größer oder gleich 99% der Sättigungs-konzentration.

Genauso fortschrittlich einzustufen ist die Tatsache, daß der durch zu kurzes Wässern, insbesondere der vollflächig bedruckten Ware, verursachte Verarbeitungsfehler "Vorgeschriebenes Mindestfüllkaliber nicht erreicht, deshalb faltiges Endprodukt", sicher vermieden wird.

Füllfertig bedeutet:

1.) füllfertig als Rollenware

2.) füllfertig abgebunden/geclippt und

3.) füllfertig gerafft

Bei den durchgeführten physikalischen Messungen zur Charakterisierung der erfindungsmäßeen Hüllen handelt es sich um

1. Bestimmung des Reibungsverhaltens nach DIN 53 375

2. Scrubtest

und

3. Kugeldruckversuch nach DIN 53 325 zur Simulation der Raffvorgänge auf handelsüblichen Raffautomaten sowie zur Bestimmung einer Mikrovorschädigung auf gerafften bzw. abgebundenen/geclippten Nahrungsmittelhüllen.

Diese Versuche werden im Rahmen der Beispiele näher erläutert.

Die Umwandlung der Hüllen in den erfindungsgemäßen Zustand erfolgt am leichtesten durch Wässerung. Dies kann von der Hüllenaußenoberfläche, von der Hülleninnenoberfläche oder von außen und von innen gleichzeitig geschehen. nabei ist die nauer der Wässerung ebenso unkritisch wie die Wasserbadtemperatur. Es muß jedoch in jedem Fall sichergestellt sein, daß die Hüllen den erfindungsgemäßen Anteil der ihrem chemischen Aufbau und ihrer Kristallinität entsprechenden Sättigungswassermenge absorbiert haben. Höhere Badwassertemperaturen beschleunigen die Wasseraufnahme, sind aber ohne Einflut auf die Sättigungsmenge.

Die minimale Zeit zur Erreichung der Sättigungskonzentration bei Lagerung im Wasser von Raumtemperatur beträgt, sofern nur eine frei zugängliche Hüllenoberfläche (unbedruckt, nicht mit Raffschmiermittel benetzt) zur Verfügung steht, 20 Minuten. Bei 70°C Wassertemperatur beträgt die entsprechende Zeit nur noch 5 Minuten.

Ein besonders bevorzugtes Verfahren zur Bereitstellung der erfindungsgemäßen Nahrungsmittelhüllen ist ihre kontinuierliche Wässerung von innen nach der Blasentechnik. Hierzu sperrt man keimfreies, bis zu 70°C erwärmtes Trinkwasser in die Hülle und wikkelt sie bei Geschwindigkeiten von 10 bis 60 m pro Minute um. Dies kann in line mit der Hüllenproduktionoder nach dem Bedtucken der Hülle von Rolle zu Rolle erfolgen, in jedem Fall aber vor der Raff- bzw. Abbinde/Clip-Konfektionierung. Die Hülle kann feuchtigkeitsdichtverpackt vor und nach dem Ratten und Abbinder/Clippen gelagert werden. Dabei verschimmelt sie nicht. Sie erfährt hierdurch auch sonst keine negativen Eigenschaftänderungen. Die innenseitige Wässerung ist bevorzugt, weil sie eine exakte Kontrolle der aufgenommenen Wassermenge zuläßt, weil die Rekontaminationsgefahr des Wassers weitgehend ausgeschlossen ist, weil rostempfindliche Maschinenteile der Raff- bzw. Abbindeautomaten sicher vor Spritzwasser geschützt sind und weil die innere Hüllenoberfläche im Gegensatz zu einer großflächig bedruckten Außenseite eine ungehinderte Wässetung zuläßt.

Die erfindungsgemäße Hülle besteht bevorzugt aus wenigstens einem Polyamid, welches in der $\alpha$-Form kristallisiert.

Besonders bevorzugt besteht die Hülle aus wenigstens einem der Polyamide 6 (Polycaprolactam), 6.6 (Polyhexamethylenadipamid) oder aus Mischungen von PA-6 und PA-6.6 und/oder Copolyamiden aus Caprolactam, hexamethylendipamin) und Adipinsäure.

Polycaprolactam und Polyhexamethylenadipamid sind hochkristallin, chemisch einwandfrei Definiert und daher konstant in ihrer Wasseraufnahme bis zur Sättigung.

Mischungen dieser Homopolyamide untereinander und mit speziellen Polyolefinen wie Ionomerharze (Surlyn® A 1650 oder 1652) Plexar® (Plexar 1 und Plexar 3), Admer® (LF 300, NF 300 und QF 300), Lupolen® (A2910) sowie EEA-Harze (Primacor 1410,1420,1430) sind ebenfalls geeignet. Diese Mischungen sind in der Patentschrift DE-PS 28 50 181 genau beschrieben.

Chemisch und in ihrer Kristallinität nicht so genau definierte Copolyamide aus Caprolactam und/oder Hexamethylenadipamid oder Mischungen dieser Polyamide mit einer Mindestwasseraufnahme von 7 Gew.-% sind ebenfalls brauchbar. Auch Hüllen, deren Polyamidanteil aus einer Mischung von Polycaprolactam und Polyhexamethylenadipamid und/oder Copolyamiden aus Caprolactam, Hexamethylendiamin und Adipinsäure bestehen, sind geeignet. Der Polyamidanteil dieser Hüllen nimmt bis zu 13 Gew.-% Wasser bis zur Sättigungskonzentration auf. Erfindungsgemäße Hüllen weisen eine Kristallinität des Polyamidanteils von größer 50 Vol.% entsprechend einer Dichte von größer 1,14 g/cm$^3$ auf. Erfindungsgemäße Hüllen aus Polycaprolactam haben eine Mindestkristallinität von 50 Vol.% entsprechend einer Mindestdichte von 1,14 g/cm$^3$ und nehmen, bezogen auf ihr Trockengewicht bzw. das Trockengewicht des Polyamidanteils 10 ± 0,5 Gew.-% Wasser auf. Bei Polyhexamethylenadipamid-Nahrungsmittelhüllen bzw. Hüllen, die dieses Polyamid enthalten betragen die entsprechenden Werte : 55 Vol.%, 1,15 g/cm$^3$ und 7,5 ± 0,5 Gew.-%.

Die erfindungsgemäße Schlauchfolie kann gerade oder gekrümmt sein. Ihre Wandstärke beträgt vorteilhaft 0,025 bis 0,100 mm, bevorzugt 0,055 bis 0,08 mm.

Erfindungsgemäße Hüllen weisen vorteilhaft eine Berstdruckfestigkeit von mindestens 0,7 bar auf.

Die erfindungsgemäßen Nahrungsmittelhüllen sind gegebenenfalls in der Masse eingefärbt oder vollflächig farbig bedruckt. Sie enthalten jedoch außer Wasser keine weiteren Zusatzmittel, insbesondere keine Raffschmier- und Feuchthaltemittel.

Sie werden in ihrer erfindungsgemäß präparierten Form ohne Applikation von Raffschmiermitteln einwandfrei gerafft bzw. abgebunden/geclipt. Sie weisen keine Verschmierungen des Druckbildes auf. Es ist kein Problem, auf ihrer Außenoberfläche Haftetiketten anzubringen. Sie sind kalibertreu, d.h. mit minimaler Durchmesserschwankung entlang der Wurstlängsachse füllbar und frei von Raff-Falten auf dem hitzebehandelten Endprodukt. Sie werden in feuchtigkeitsdichten Verpackungen verarbeitungsfertig geliefert.

Es ist möglich, auch bei einem weit unterhalb der Sättigungskonzentration liegenden Befeuchtungsgrad, bspw. ab 3,5 Gew.-% Wassergehalt in der Hülle, lochfrei zu raffen bzw. mit minimierter Ausschußquote abzubinden/abzuclippen und dann die Hüllen auf ihre erfindungsgemäße, füllfertige Form zu bringen, d.h., in einem zweiten Schritt durch Nachwässern in den wassergesättigten Zustand zu überführen. Diese Vorgehensweise ist zwar brauchbar, jedoch nicht bevorzugt, weil sie die Raff-Falten auf dem hitzebehandelten Endprodukt nicht in dem Maße minimiert, wie die zuvor beschriebene bevorzugte Ein-Stufen-Sättigung vor dem Raffen.

Die Erfindung wird in den Ansprüchen 1-24 definiert.

Die Erfindung wird durch die nachstehenden Beispiele näher erläutert:

## BEISPIEL 1

1030 m einer bedruckten nach DE-PS 32 27 945 multiaxial simultan verstreckten und unter kontrolliertem multiaxialem Schrumpf thermofixierten Polycaprolactam-Schlauchhülle mit einem Nennkaliber von 90 mm wurden mit Wasser gesättigt, indem ca. 4 1 65°C heißen entkeimten Trinkwassers eingefüllt, als Blase eingesperrt und von Rolle zu Rolle umgewickelt wurden. Durch diese Behandlung nahm die Nahrungsmittelhülle 10 Gew.-% Wasser, bezogen auf ihr absolutes Trockengewicht, auf. Zur gleichmäßigen Verteilung des aufgenommenen Wassers in der Hüllenwand wurde die Hüllenrolle 30 Minuten in einem LDPE-Beutel versiegelt zwischengelagert.

Aus dieser mit Wasser gesättigten Schlauchrolle wurden dann auf einer handelsüblichen Raffmaschine (Typ 6/1, Fabrikat Küko, Groß-Gerau/BRD) ohne Raffschmiermittelbesprühung 25 Stück 20 m-Raupen hergestellt und erneut feuchtigkeitsdicht verpackt. 20 der auf diese Weise präparierten 25 Raupen wurden mit Druckluft von 0,3 bar beaufschlagt und durch Tauchen in Wasser in einem 22 m langen Wasserbecken auf Raffbeschädigungen (Löcher) untersucht. Parallel hierzu fand die visuelle Überprüfung der Raupen auf Verschmierungen des Druckbildes statt.

Die Ergebnisse wurden sortiert, gezählt, protokolliert und in der Tabelle 1 aufgelistet. 4 weitere Raupen wurden ohne das übliche Einweichen auf einem marktüblichen Portionier- und Clipautomaten (Typ FCA-Super 3451, fabrikat Niedecker GmbH, frankfurt/BRD) zu 10 kg schweren Brühwürsten von 1,35 m Länge mit einem typischen Bologna-Brät (gem. Leitsätze für fleisch und fleischerzeugnisse 2.224.4) gefüllt. Bei 50 der so gefüllten Wurste wurden die maximalen Kaliberschwankungen durch Messen des Wurstdurchmessers in 0,1 m Entfernung von den beiden Wurstenden und in der Wurstmitte festgestellt, protokolliert und in der Tabelle 1 aufgelistet.

Danach wurden die Würste 3,5 Stunden bei 78°C im Brühschrank gebrüht, für 15 Minuten mit dampfgesättigtem Heißrauch geräuchert, durch Duschen und schließlich im Kühlraum auf 3°C im Kern durchgekühlt und visuell auf die Sichtbarkeit von Raff-Falten auf dem Endprodukt begutachtet. Die Beurteilung ist in der Tabelle 1 festgehalten. Die letzte Testraupe schließlich diente einmal zur exakten Bestimmung des Wassergehalts in der Nahrungsmittelhülle und zum zweiten zur feststellung einer eventuellen Mikroschädigung während des Raffens mit Hilfe des Kugeldruckversuchs nach DIN 53 325. Liegt eine Mikroschädigung beispielsweise am Kreuzungspunkt einiger Raff-Falten in form von "Crazes" vor, die noch kein Raffloch verursacht hat, jedoch bei höherer Innendruckbelastung während der Wurstgarung durchbrechen würde, so stellt man bei diesem Versuch fest, daß die Bruchkraft $F_B$ und der Bruchweg a nur 30% der tatsächlichen $F_B$- und a-Werte bei "Crazes"-freien Proben erreichen.

Die letztgenannten Versuchsergebnisse sind in Tabelle 2 aufgelistet.

Weitere 500 m der mit Wasser gesättigten Schlauchrolle wurden auf einer marktüblichen Abbindemaschine (Typ ZD1 Fabrikat VEB Nagema Dresden/DDR), zu 1.000 Abschnitten von 0,5 m Länge geschnitten, geclipt und abgebunden. Der durch Clipbeschädigungen und schief gesetzte Clips bzw. Knoten entstandene Ausschuß wurde aussortiert, gezählt und in der Tabelle 1 protokolliert. Aus den resllichen 30 m der Ausgangsrolle wurden 10 Probekörper mit je 47 mm Durchmesser gestanzt, die zur Durchführung der wegabhängigen Kugeldruckversuche nach DIN 53 325 dienten. Hier wurde nicht die Bruchkraft $F_B$ und der Bruchweg a des Kugelstempels, sondern in Schritten von 1 mm die Stoßkraft F zu dem jeweiligen Stoßweg a bestimmt.

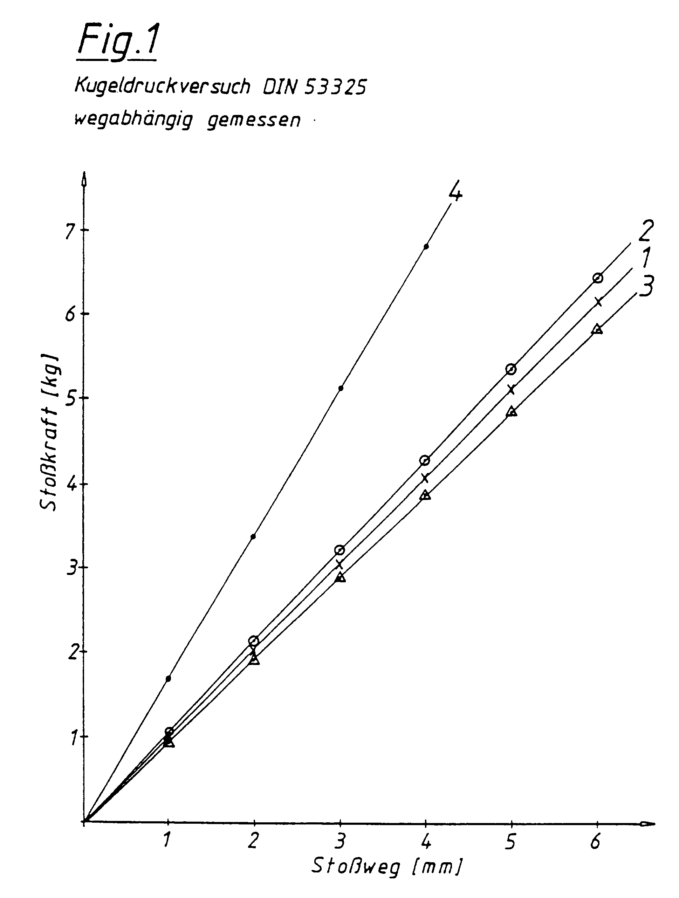

Die Auftragung F über a ergab für Stoßwege bis zu 6 mm eine Gerade, deren Steigung dem Aufspringverhalten der Hüllen-Plissierfalten auf der Abbindemaschine proportional ist. Hier wird ein multiaxialer Elastizitätsmodul E* gemessen, der aber, weil er nicht auf die konstante Hüllenwandstärke bezogen ist, in (kg/mm) ermittelt wurde. E* ist in der Tabelle 2 angegeben. Der dazugehörige Kurvenverlauf (1) ist in der Figur 1 dargestellt.

Zur physikalischen Simulation des Raffvorgangs wurden zwei weitere Grundsatzmessungen durchgeführt:

1. Um den Förderstau vor dem Raffdorn zu untersuchen, wurden Reibversuche nach DIN 53 375 herangezogen. Es wurde der Reibungswert zwischen der Außenoberfläche der mit Wasser gesättigten Hülle gegen ein Polyurethan-Elastomer mit 95 Shore-A Härte gemessen. Mit diesem Polyurethan-Elastomer werden die Raffwalzen bestückt, die die Hülle aufden Raffstab fördern. DIN-Probekörper wurden den Praxisbedingungen entsprechend aus noch nicht gerafften, d.h. glatten Hüllen herausgestanzt. Die Meßwerte sind in der Tabelle 2 zusammengestellt.

2. Um die Zusammenhänge bei der Knautsch-(Knick-Scrub-) Belastung der Nahrungsmittelhüllen beim Ratten zu simulieren, wurde der Scrubtest ausgewählt, der wie folgt durchgeführt wird : Aus den Hüllen gemäß Beispiel 1 wurden Probekörper von 90 x 40 mm ausgestanzt. Die beiden Einspannvorrichtungen der Prüfvorrichtung laufen von einem drehzahlkonstanten Elektromotor angetrieben in entgegengesetzter Richtung parallel zueinander, mit einem maximalen Hub von 20 mm hin und her. Auf den eingespannten Probekörper wird ein Schlitten von 1 kg gesetzt. Die Apparatur vollzieht 70 Hin- und Herbewegungen pro Minute.

Der Probekörper wird mit soviel Dehnungsfreiheit eingespannt, daß er in der weitesten Stellung, d.h. in den Umkehrpunkten nicht bricht oder zerreißt. Durch Einschalten des Elektromotors setzt die Scrubbelastung der Probe ein. Die Hübe werden automatisch gezahlt und es wird die Anzahl der Hübe bis zum völligen Versagen (Bruch) der Probe gemessen. Das Meßergebnis (10 Messungen) an Proben gemäß Beispiel 1 ist in der Tabelle 2 angegeben.

### BEISPIEL 2

Die gesamte Vorgehensweise des Beispiels 1 wurde mit 1030 m Nahrungsmittelhüllen nach DE-PS 32 27 945 aus Polyhexamethylenadipamid wiederholt. Die Wässerung von innen beim Umwickeln nach der geschilderten Blasentechnik führte dabei zu einer Gewichtszunahme von 8%.

Alle praktischen anwendungstechnischen und physikalischen Versuche des Beispiels 1 wurden auch hier vorgenommen. Die Ergebnisse sind in den Tabellen 1 und 2 zusammengefaßt und in der Figur 1, Kurve (2) dargestellt.

### BEISPIEL 3

Die gesamte Vorgehensweise des Beispiels 1 wurde mit 1030 m Nahrungsmittelhüllen gemäß DE-PS 28 50 181, bestehend aus 88 Gew.-% Polycaprolactam und 12 Gew.-% Ionomerharz Surlyn® A 1652 wiederholt. Die Wässerung von innen beim Umwickeln nach der geschilderten Blasentechnik führte dabei zu einer Gewichtszunahme von 8,8%.

Alle praktischen, anwendungstechnischen und physikalischen Versuche des Beispiels 1 wurden auch hier durchgeführt. Die Ergebnisse sind in den Tabellen 1 und 2 zusammengefaßt. In der Figur 1 ist die wegabhängig gemessene Gerade (3) des Kugeldruckversuchs nach DIN 53 325 eingetragen.

### BEISPIEL 4

Es wurde mit einer Polyamidhülle gemäß DE-PS 28 50 182, bestehend aus reinem Polycaprolactam genauso verfahren wie in Beispiel 1. Die erfindungsgemäße Wässerung führte hierbei zu einem Wassersättigungswert von 10%. Die Ergebnisse der praktischen, anwendungstechnischen und der physikalischen Versuche sind in den Tabellen 1 und 2 aufgezeichnet. Der Kurvenverlauf des wegabhängig aufgenommenen Kugeldruckversuchs nach DIN 53 325 ist identisch mit dem der Geraden (3) in Figur 1 von Beispiel 3.

VERGLEICHSBEISPIEL 1 (Stand der Technik gem. DE-PS 32 27 945)

Es wurde mit dem gleichen Schlauchhüllenmaterial wie in Beispiel 1, Jedoch ohne die erfindungsgemäße Befeuchtung vor der Konfektionierung operiert. Die Raffung wurde unter Anwendung des Raffschmiermittels Miglyol® 812 (ein Triglyceridgemisch der Dynamit Nobel AG, Troisdorf/BRD) auf derselben Raffmaschine wie im Beispiel 1 durchgeführt. Alle praktischen, anwendungstechnischen und physikalischen Messungen des Beispiels 1 wurden durchgeführt.

Die Brätfüllversuche auf dem FCA-S wurden mit vor Ort auf 9% Feuchtegehalt gesättigten Hüllen vorgenommen. Die Bestimmung der Mikroschädigung erfolgte mit Hilfe des Kugeldruckversuchs nach DIN 53 325. Die Probekörper wurden aus lufttrocken mit Raffschmiermittel gerafften Raupen gestanzt.

Ausgehend von einer noch nicht erfindungsgemäß gewässerten, lufttrockenen Mutterrolle wurden unter sonst exakt eingehaltenen Bedingungen des Beispiels 1 1.000 Abschnitte à 0,50 m hergestellt.

Dieser Mutterrolle wurden auch die Probekörper für

1. wegabhängige Kugeldruckversuche,
2. für die Reibversuche gegen PUR-Elastomer und
3. für den Scrubtest entnommen.

Die Ergebnisse sind in den Tabellen 1 und 2 zusammengefaßt und in der Figur 1, Kurve (4) dargestellt.

VERGLEICHSBEISPIEL 2 (Stand der Technik gem. DE-PS 32 27 945)

Es wurde mit dem gleichen Schlauchhüllenmaterial wie im Beispiel 1, jedoch ohne die erfindungsgemäße Wässerung und ohne Raffschmiermittelapplikation gerafft. Es war nicht moglich, von 20 Raupen eine einzige rafflochfreie Raupe zu erhalten. Daher wurde auf die Durchführung der anwendungstechnischen und physikalischen Prüfungen verzichtet. Die Ergebnisse sind in der Tabelle 1 aufgeführt.

Aus den Tabellen 1 und 2 sowie aus der Figur 1 geht hervor, daß die erfindungsgemäßen Hüllen ganz im Gegensatz zu Schlauchfolien gemäß DE-PS 32 27 945

a. störungs- und rafflochfrei gerafft werden können und dabei kein Raffschmiermittel benötigen,
b. unter drastischer Reduktion des Ausschusses abgebunden/geclippt werden können und
c. auch anwendungstechnisch mit minimaler Kaliber schwankung zu füllen sind sowie keine lästigen Raff-Falten mehr auf dem Endprodukt aufweisen.

Tabelle 1   Ergebnisse der Raff- und Abbinde-/Clip-Versuche und der anwendungstechnischen Versuche

| Beispiel | (1)<br>Wasser-<br>gehalt<br><br>% | (2)<br>Miglyol®<br>812 | (3)<br>Raffabfall<br><br><br>% | (4)<br>Förderstau<br><br><br>% | (5)<br>Druckbild<br>verwischt<br><br>% | (6)<br>Abbinde/<br>Clipabfall<br><br>% | (7)<br>Füll-<br>kaliber-<br>schwankung<br>mm | (8)<br>Raffalten<br>auf dem<br>Endprodukt |
|---|---|---|---|---|---|---|---|---|
| 1 | 10,0 | nein | 0 | 0 | 0 | < 1 | < ± 1 | nein |
| 2 | 7,5 | nein | 0 | 0 | 0 | < 1 | < ± 1 | nein |
| 3 | 8,8 | nein | 0 | 0 | 0 | < 1 | < ± 1 | nein |
| 4 | 10,0 | nein | 0 | 0 | 0 | < 1 | < ± 1 | nein |
| Vgl. 1 | 1,3 | ja | 0 | 25 | 25 | 23 | ± 2,5 | ja |
| Vgl. 2 | 1,3 | nein | 100 | 5 | 5 | - | - | - |

(1)   Bestimmt durch Differenzwägung nach 3 h bei 105 ± 2 °C im Vakuum-Trockenschrank.

(2)   Handelsübliches Raffschmiermittel.

(3)   Von 20 Stück 20 m-Raupen. Eine Raupe mit einem oder mehreren Löchern bedeutet 5 % Abfall.

(4)   Von 20 Stück 20 m-Raupen. Eine Raupe mit Förderstau auf den Raffdorn gefördert bedeutet 5 % Abfall.

(5)   Von 20 Stück 20 m-Raupen. Eine Raupe mit wenigstens an einer Stelle verwischtem Druckbild = 5 % Abfall.

(6)   Von 1000 Stück Hüllen. 10 Stück vom Clip bzw. vom Garn schief erfaßte Hüllen bedeuten 1 % Abfall.

(7)   Gemessen in 0,1 m Entfernung von den Wurstzipfeln und in der Wurstmitte.

(8)   Visuell beurteilt. "Nein" bedeutet: nicht sichtbar in 0,3 m Entfernung.

EP 0 248 860 B2

Tabelle 2    Ergebnisse der physikalischen Messungen

| Beispiel | Wasser-gehalt % | (1) Kugeldruckversuch | | (2) E* wegabhängig kg / mm | (3) Reibungswert | (4) Anzahl der Hübe bis zum Bruch |
| | | Durchstoß-kraft kg | Durchstoß-weg mm | | | |
|---|---|---|---|---|---|---|
| 1 | 10,0 | 15,5 | 14,8 | 1,03 | 35 | 1119 |
| 2 | 7,5 | 15,2 | 16,4 | 1,08 | 42 | 1030 |
| 3 | 8,8 | 12,5 | 12,8 | 0,98 | 48 | 1250 |
| 4 | 10,0 | 10,5 | 10,7 | 0,98 | 40 | 1170 |
| Vgl. 1 | 1,3 | 19,1 18,8 4,2 3,8 | 11,2 11,0 3,2 3,0 | 1,71 | 14 | 358 |

(1) Gemessen nach DIN 53 325 bis zum Bruch zur Bestimmung einer Mikro-Vorschädigung, die sich durch vorzeitigen Bruch bemerkbar macht. Siehe Vgl. 1, 3. und 4. Messung.

(2) E* ist die der Figur 1 entnommene Steigung der "F über a-Geraden". E* ist dem Aufspringverhalten der Plissierfalten proportional. Kleinere E*-Werte bedeuten eine erfindungsgemäße Verbesserung beim Clippen/Abbinden.

(3) Gemessen nach DIN 53 375 gegen PUR-Elastomer mit 95 Shore-A Härte. Das Reibverhalten beim Raffen wird simuliert. Ölbeschichtete Folie wie im Vgl. 1 senkt den Reibungswert und verursacht Förderstau beim Raffen.

(4) Simuliert die Knautsch/Knick-Belastung beim Raffen. Höhere Werte bedeuten höhere Belastbarkeit beim Raffen.

## Patentansprüche

1. Füllfertig konfektionierte Nahrungsmittelhülle, insbesondere zur Verpackung und Umhüllung von heiß abgepackten oder nach dem Verpacken erhitzten Nahrungsmitteln, enthaltend wenigstens ein Polyamid, das bis zur Sättigung wenigstens 5 % seines Gewichts an Wasser aufnehmen kann, dadurch gekennzeichnet, daß der Polyamidanteil der Nahrungsmittelhülle vor der konfektionierung wenigstens 5 Gew.-% Wasser, entsprechend einem Wassergehalt von größer oder gleich 80 % seiner Sättigungskonzentration aufgenommen hat, und die füllfertige Hülle keine Raffschmiermittel sowie keine Feuchthaltemittel enthält.

**2.** Nahrungsmittelhülle nach Anspruch 1, gekennzeichnet durch die folgenden physikalischen Eigenschaften:

a) Sie hat im füllfertig gerafften und befeuchtteten Zustand eine Mindestdurchstoßkraft $F_B$ von 8,0 kg und einen entsprechenden Mindestdurchstoßweg a von 8,5 mm, gemessen in Anlehnung an DIN 53 325.

b) Die Steigung der nach dem Kugeldruckversuch (DIN 53 325) ermittelten Gerade F über a beträgt 0,7 bis 1,3 (kg/mm).

c) Die nach DIN 53 375 bestimmten Reibungswerte der Nahrungsmittelhülle gegen ein PUR-Elastomer mit 95 Shore A-Härte betragen mindestens 30.

d) Die Hülle übersteht mindestens 800 Hübe ohne Bruch, wenn sie dem Scrubtest (gemäß beigefügter Prüfvorschrift) unterzogen wird.

**3.** Nahrungsmittelhülle nach Anspruch 1, gekennzeichnet durch einen Wassergehalt von 6 bis 13, vorzugsweise 7 bis 11 Gew.-%.

**4.** Nahrungsmittelhülle nach einem der Ansprüche 1 bis 3, dadurch gekennzeichnet, daß der Wassergehalt ihres Polyamidanteils größer oder gleich 95%, insbesondere größer odergleich 99% seiner Sättigungskonzentration ist.

**5.** Nahrungsmittelhülle nach einem der Ansprüche 1 bis 4, dadurch gekennzeichnet, daß sie Polycaprolactam, Polyhexamethylenadipamid, Mischungen von Polycaprolactam und Polyhexamethylenadipamid und/oder Copolyamide aus Caprolactam, Hexamethylendiamin und Adipinsäure enthält oder aus diesen Polyamiden, Mischungen bzw. Copolyamiden besteht.

**6.** Nahrungsmittelhülle nach einem der Ansprüche 1 bis 5, dadurch gekennzeichnet, daß sie aus einer Mischung von 50 bis 99 Gew.-% der genannten Polyamide und 1 bis 50 Gew.-% wenigstens eines Ionomerharzes und/oder eines modifizierten Ethylen-Vinylacetat-Copolymeren besteht.

**7.** Nahrungsmittelhülle nach einem der Ansprüche 1 bis 6, dadurch gekennzeichnet, daß der Polyamidanteil eine Kristallinität von größer 50 Vol.% entsprechend einer Dichte von größer 1,14 g/cm³ aufweist.

**8.** Nahrungsmittelhülle nach einem der Ansprüche 1 bis 7, dadurch gekennzeichnet, daß sie aus einem Polyamid besteht, welches in der $\alpha$-Form kristallisiert.

**9.** Nahrungsmittelhülle nach einem der Ansprüche 1 bis 8, dadurch gekennzeichnet, daß sie mit einer maximalen Kaliberschwankung kleiner als ± 1,5 mm verfüllt werden kann.

**10.** Nahrungsmittelhülle nach einem der Ansprüche 1 bis 9, dadurch gekennzeichnet, daß sie einschichtig ist.

**11.** Nahrungsmittelhülle nach einem der Ansprüche 1 bis 10, dadurch gekennzeichnet, daß sie nahtlos ist.

**12.** Nahrungsmittelhülle nach einem der Ansprüche 1 bis 11, dadurch gekennzeichnet, daß sie in geraffler Form als Raupe, einseitig abgebunden oder als Rolle aufgewickelt vorliegt.

**13.** Nahrungsmittelhülle nach einem der Ansprüche 1 bis 12, dadurch gekennzeichnet, daß sie gerade oder nach der Art eines Kranzdarnns gekrümmt ist.

**14.** Nahrungsmittelhülle nach einem der Ansprüche 1 bis 13, gekennzeichnet durch eine Wandstärke von 0,025 bis 0,100 mm.

**15.** Nahrungsmittelhülle nach einem der Ansprüche 1 bis 14, gekennzeichnet durch eine Berstdruckfestigkeit von mindestens 0,7 bar.

**16.** Nahtungsmittelhülle nach einem der Ansprüche 1 bis 15, dadurch gekennzeichnet, daß sie in feuchtigkeitsdicht verpackten Zustand ohne Schimmelbildung 6 Monate lagerbeständig ist.

17. Verfahren zur Herstellung einer Nahrungsmittelhülle nach einem der Ansprüche 1-16, <u>dadurch gekennzeichnet</u>, daß die Hülle bis zur Erreichung eines Mindestwassergehaltes ihres Polyamidanteils von 5 Gew.-%, die einer Wasserkonzentration die größer oder gleich 80%, vorzugsweise größer oder gleich 95%, insbesondere bevorzugt größer oder gleich 99% seiner Wassersättigungskonzentration entspricht, befeuchtet wird.

18. Verfahren nach Anspruch 17, <u>dadurch gekennzeichnet</u>, daß die Befeuchtung mit keimfreiem Trinkwasser vorgenommen wird.

19. Verfahren nach einem der Ansprüche 17 bis 18, <u>dadurch gekennzeichnet</u>, daß die Hülle von außen, vorzugsweise durch eine 30 bis 60 minütige Lagerung in Wasser, befeuchtet wird.

20. Verfahren nach einem der Ansprüche 17 bis 19, <u>dadurch gekennzeichnet</u>, daß die Innenseite der Hülle, vorzugsweise durch ein in der Hülle eingeschlossenes Wasservolumen befeuchtet wird.

21. Verfahren nach einem der Ansprüche 17 bis 20, <u>dadurch gekennzeichnet</u>, daß die Hülle nach der Wasserbehandlung und vorweiteren Verarbeitungsstufen, wie Konfektionierung zwecks homogener Verteilung des Wassers in der Hülle etwa eine Stunde bei Raumtemperatur gelagert wird.

22. Verfahren nach einem der Ansprüche 17 bis 21, <u>dadurch gekennzeichnet</u>, daß die Hülle nach der Wasseraufnahme bis zum jeweiligen Sättigungsgrad des Polyamids gerafft wird.

23. Verfahren nach einem der Ansprüche 17 bis 22, <u>dadurch gekennzeichnet</u>, daß die Hülle nach der Wasseraufnahme bis zum jeweiligen Sättigungsgrad in Abschnitte geschnitten und diese wenigstens einseitig mit Garn und/oder mit Metallclip verschlossen werden.

24. Verwendung einer Nahrungsmittelhülle nach einem der Ansprüche 1 bis 16 zum Abfüllen von Nahrungsmitteln, insbesondere Kochschinken und Brühwürsten.

## Claims

1. A conditioned food stuffs casing that is ready for filling, in particular for packing and encasing hot packed food stuffs or those that are heated after packing, said food stuffs casing comprising at least one polyamide which can absorb up to saturation at least 5% of its own weight in water, characterized in that the polyamide portion of the food stuffs casing, prior to make-up, has absorbed at least 5 %-wt. of water, corresponding to a water content of greater than or equal to 80% of its saturation concentration, and that the ready-to-fill casing does not contain any shirring lubricants and moisturizers.

2. A food stuffs casing according to claim 1, characterized by the following physical properties:
    a) ready for filling, shirred, and moistened, it has a minimum impact penetration strength $F_B$ of 8.0 kg and a corresponding minimum impact penetration length a of 8.5 mm, measured following the method of DIN 53 325,
    b) the slope of the line F determined by the ball compression test (DIN 53 325) over a amounts to 0.7 to 1.3 (kg/mm),
    c) the coefficients of friction determined according to DIN 53 375 of the food stuffs casing as opposed to a PUR-elastomer having a Shore-A-hardness of 95 amount to at least 30,
    d) the casing withstands a minimum of 800 strokes without rupture, when subjected to the scrub test (according to the enclosed test specification).

3. A food stuffs casing according to claim 1, characterized by a water content of 6 to 13, preferably 7 to 11 %-wt.

4. A food stuffs casing according to any one of claims 1 to 3, characterized in that the water content of its polyamide portion is greater than or equal to 95%, in particular greater than or equal to 99% of its saturation concentration.

5. A food stuffs casing according to any one of claims 1 to 4, characterized in that it comprises polycaprolactam, polyhexamethylene adipamide, mixtures of polycaprolactam and polyhexamethylene adipamide and/or copolyamides of caprolactam, hexamethylene diamine, and adipic acid, or that it consists of these polyamides, mixtures or copolyamides, respectively.

6. A food stuffs casing according to any one of claims 1 to 5, characterized in that it consists of a mixture of 50 to 99%-wt. of the above quoted polyamides and 1 to 50%-wt. of at least one ionomer resin and/or a modified ethylene-vinylacetate copolymer.

7. A food stuffs casing according to any one of claims 1 to 6, characterized in that the polyamide content has a crystallinity of greater than 50%-vol. corresponding to a density of greater than 1.14 g/cm$^3$.

8. A food stuffs casing according to any one of claims 1 to 7, characterized in that it consists of a polyamide which crystallizes in the alpha-form.

9. A food stuffs casing according to any one of claims 1 to 8, characterized in that it can be filled at a maximum diameter variation that is smaller than ± 1.5 mm.

10. A food stuffs casing according to any one of claims 1 to 9, characterized in that it is of a single layer.

11. A food stuffs casing according to any one of claims 1 to 10, characterized in that it is seamless.

12. A food stuffs casing according to any one of claims 1 to 11, characterized in that it is present in shirred condition as a shirred stick, tied off at one end, or wound up as a roll.

13. A food stuffs casing according to any one of claims 1 to 12, characterized in that it is either straight or curved in the manner of a wreath-shaped casing.

14. A food stuffs casing according to any one of claims 1 to 13, characterized by a wall thickness of 0.025 to 0.100 mm.

15. A food stuffs casing according to any one of claims 1 to 14, characterized by a bursting strength of at least 0.7 bar.

16. A food stuffs casing according to any one of claims 1 to 15, characterized in that when packed in a moisture-proof packing it has a shelf life of 6 months without the formation of mould.

17. A process for the production of a food stuffs casing as defined in any one of claims 1 to 16, characterized in that the casing is moistened up to the point of achieving a minimum water content of its polyamide portion of 5 %-wt., which corresponds to a water concentration of greater than or equal to 80%, preferably greater than or equal to 95%, and in particular preferred of greater than or equal to 99% of its water saturation concentration.

18. A process according to claim 17, characterized in that moistening is carried out with germ-free drinking water.

19. A process according to any one of claims 17 to 18, characterized in that the casing is moistened from outside, preferably by being stored for 30 to 60 minutes in water.

20. A process according to any one of claims 17 to 19, characterized in that the inside of the casing is moistened, preferably by a quantity of water enclosed within the casing.

21. A process according to any one of claims 17 to 20, characterized in that after being treated with water and prior to further processing, such as make-up, the casing is stored at room temperature for approximately one hour to assure the homogeneous distribution of the water within the casing.

22. A process according to any one of claims 17 to 21, characterized in that after the water absorption, the casing is shirred up to the corresponding degree of saturation of the polyamide.

EP 0 248 860 B2

**23.** A process according to any one of claims 17 to 22, characterized in that after the water absorption up to the corresponding degree of saturation, the casing is cut into sections and these are closed off at least at one end with thread and/or a metal clip.

**24.** The use of the food stuffs casing as defined in any one of claims 1 to 16 for filling food stuffs, in particular cooked ham and boiled sausages.

**Revendications**

**1.** Enveloppe pour produits alimentaires, confectionnée toute prête, en particulier pour emballer et envelopper des produits alimentaires emballés à chaud ou chauffés après l'emballage, comprenant au moins un polyamide capable d'absorber au moins 5 % de son poids d' eau jusau'à la saturation, caractérisé en ce que la fraction polyamidique de l'enveloppe a absorbé, avant la confection, au moins 5 % en poids d'eau, correspondant à une teneur en eau égale ou supérieure à 80 % de sa concentration de saturation et l'enveloppe toute prête ne contient pas de lubrifiants de replissage ni non plus de produits de retenue ou de conservation d'humidité.

**2.** Enveloppe pour produits alimentaires suivant la revendication 1, caractérisée par les propriétés physiques ci-après :
a) à l'êtat replissé ou froncé, prêt au remplissage et humidifié, elle possède une résistance à la perforation $F_B$ d'au moins 8,0 kg avec une longueur de perçage $\underline{a}$ correspondante d'au moins 8,5 mm, mesurées selon la norme DIN 53325;
b) la pente de la droite F, déterminée par l'essai de dureté à la bille (norme DIN 53325), par rapport à $\underline{a}$ est comprise entre 0,7 et 1,3 (kg/mm);
c) ses coefficients de frottement sur un élastomère de polyuréthanne d'une dureté Shore A de 95, déterminés selon la norme DIN 53375, sont au moins égaux à 30 et
d) l'enveloppe soumise à l'essai de friction (effectué selon la recette d'essai jointe) résiste à au moins 800 courses sans rupture.

**3.** Enveloppe pour produits alimentaires suivant la revendication 1, caractérisée par une teneur en eau de 6 à 13 et de préférence de 7 à 11% en poids.

**4.** Enveloppe pour produits alimentaires suivant l'une des revendications 1 à 3, caractérisée en ce que la teneur en eau de sa fraction polyamidique est égale ou supérieure à 80%, de préférence égale ou supérieure à 99% de sa concentration de saturation.

**5.** Enveloppe pour produits alimentaires suivant l'une des revendications 1 à 4, caractérisée en ce qu'elle contient du polycaprolactame, du polyhexaméthyléneadipamide, des mélanges de polycaprolactame et de polyhexaméthylène-adipamide et/ou des copolyamides de caprolactame, d'hexaméthyléne-diamine et d'acide adipique ou est constituée de ces polyamides, mélanges ou copolyamides.

**6.** Enveloppe pour produits alimentaires suivant l'une des revendications 1 à 5, caractérisée en ce qu'elle est constituée d'un mélange de 50 à 99% en poids des polyamides cités et de 1 à 50% en poids d'au moins une résine ionomère et/ou un copolymère d'éthylène et d'acétate de vinyle modifié.

**7.** Enveloppe pour produits alimentaires suivant l'une des revendications 1 à 6, caractérisee en ce que la fraction polyamidique possède une cristallinité supérieure à 50% en volume, correspondant à une masse volumique supérieure à 1,14 g/cm$^3$.

**8.** Enveloppe pour produits alimentaires suivant l'une des revendications 1 à 7, caractérisée en ce qu'elle est formée d'un polyamide cristallisant dans la forme $\alpha$.

**9.** Enveloppe pour produits alimentaires suivant l'une des revendications 1 à 8, caractérisée en ce qu'elle peut être remplie avec un écart de calibre maximal inférieur à ± 1,5 mm.

**10.** Enveloppe pour produits alimentaires suivant l'une des revendications 1 9, caractérisée en ce qu'elle est monocouche.

13

**11.** Enveloppe pour produits almimentaires suivant l'une des revendications 1 à 10, caractérisée en ce qu'elle est sans couture ou soudure.

**12.** Enveloppe pour produits alimentaires suivant l'une des revendications 1 à 11, caractérisée en ce qu'elle se présente à l'état replissé en chenille, ligaturée à une extrémité ou enroulée en rouleau.

**13.** Enveloppe pour produits alimentaires suivant l'une des revendications 1 à 12, caractérisée en ce qu'elle est droite ou courbée à la manière d'un boyau en couronne.

**14.** Enveloppe pour produits alimentaires suivant l'une des revendications 1 à 13, caractérisée en ce que sa paroi possède une épaisseur comprise entre 0,025 et 0,100 mm.

**15.** Enveloppe pour produits alimentairessuivant l'une des revendications 1 à 14, caractérisée en ce qu'elle possède une résistance à l'éclatement d'au moins 0,7 mbar.

**16.** Enveloppe pour produits alimentaires suivant l'une des revendications 1 à 16, caractérisée en ce que, à l'état emballé de façon étanche à l'humidité, elle peut être conservée pendant six mois sans moisissure.

**17.** Procédé de fabrication d'une enveloppe pour produits alimentaires suivant les revendications 1 à 17, caractérisé en ce que l'enveloppe est humidifiée jusqu'à l'obtention d'une teneur en eau d'au moins 5% et de préférence jusqu'à sa teneur de saturation en eau.

**18.** Procédé suivant la revendication 17, caractérisé en ce que l'humidification est réalisée avec de l'eau potable stérile.

**19.** Procédé suivant l'une des revendications 17 et 18, caractérisé en ce que l'humidification de l'enveloppe est effectuée de l'extérieur, de préférence en la plaçant pendant 30 à 60 minutes dans de l'eau.

**20.** Procédé suivant l'une des revendications 17 à 19, caractérisé en ce que l'enveloppe est humidifiée de l'intérieur, de préférence par un volume d'eau emprisonné dans celle-ci.

**21.** Procédé suivant l'une des revendications 17 à 20, caractérisé en ce que l'enveloppe est maintenue, après l'humidification et avant d'autres stades de traitement tels que le confectionnement, pendant environ une heure à la température ambiante pour assurer une répartition homogène de l'eau dans l'enveloppe.

**22.** Procédé suivant l'une des revendications 17 à 21, caractérisé en ce qu'on replisse l'enveloppe après absorption d'eau jusqu'à la concentration d'équilibre du polyamide.

**23.** Procédé suivant l'une des revendications 17 à 22, caractérisé en ce que, après l'absorption d'eau jusqu'à la concentration d'équilibre, on coupe l'enveloppe en pièces que l'on ferme au moins d'un côté à l'aide d'un fil et/ou d'une agrafe métallique.

**24.** Procédé de préparation de produits alimentaires, en particulier de jambon cuit et de saucisses à ébouillanter, caractérisé en ce que les produits alimentaires sont emballés dans une enveloppe suivant l'une des revendications 1 à 16.

# Fig.1

Kugeldruckversuch DIN 53325

wegabhängig gemessen